# EUROPEAN PATENT APPLICATION

(11) **EP 2 548 746 A1**
(43) Date of publication of application: **23.01.2013**
(21) Application number: 11174469.4
(22) Date of filing: 19.07.2011
(51) Int. Cl.: B42F 9/00

(54) **Backlighting folder device**

(71) Applicant: Tai, Yung-Che, Taichung City 403 (TW)
(72) Inventor: Tai, Yung-Che, Taichung City 403 (TW)
(74) Representative: Zinkler, Franz

(57) **Abstract**

A backlighting folder device includes a folder body (10) , a power supply, a light-emitting unit (30), a light guide unit (40) and a clamp unit (50) . The folder body (10) includes two cover panels (11, 12), a spine (13) interconnecting the cover panels (11, 12), and an inner side (14) defined by the cover panels (11, 12) and the spine (13). The power supply has a battery unit (70) mounted on the folder body (10) . The light-emitting unit (30) is connected to the battery unit (70) . The light guide unit (40) is disposed at the inner side (14) and has a light guide plate (41) to guide light emitted from the light-emitting unit. The clamp unit (50) is adhered to the light guide plate (41) by a magnetic attraction.

## Description

This invention relates to a folder device, and more particularly to a backlighting folder device.

In commercial venues, such as restaurants, cafes, etc., information sheets, such as menus, ordering sheets, bills, etc., are usually clamped on a folder for positioning purposes and for providing conveniences to customers to read/look at the contents of the information sheets, or to sign or write thereon. However, in some restaurants or cafes, because dim light is arranged in the premises in order to produce a romantic atmosphere, it is difficult for a customer to clearly see a menu or bill held by a folder handed by a waiter or to sign or write thereon.

An object of this invention is to provide a folder device having a backlighting light source to emit light to an inside part of the folder device so that, when the folder device is unfolded, the contents within the folder device can be seen clearly.

Accordingly, the present invention provides a backlighting folder device which comprises: a folder body, a power supply, at least one light-emitting unit, at least one light guide unit and at least one clamp unit. The folder body includes two cover panels, a spine interconnecting the cover panels, and an inner side defined by the cover panels and the spine. The power supply is mounted on the folder body. The light-emitting unit is connected to the power supply. The light guide unit is disposed at the inner side and has a light guide plate to guide light emitted from the light-emitting unit. The clamp unit is positioned to the folder body at the inner side. Light from the light-emitting unit is scattered uniformly within the light guide unit.

Other features and advantages of the present invention will become apparent in the following detailed description of the preferred embodiment with reference to the accompanying drawings, of which:
Figure 1 is an exploded perspective view of the first preferred embodiment of a backlighting folder device according to the present invention;
Figure 2 is another exploded perspective view of the first preferred embodiment for illustrating a folder body, a battery case and a battery unit;
Figure 3 is a perspective view of the first preferred embodiment in an assembled state;
Figure 4 is a sectional view of the first preferred embodiment;
Figure 5 is an exploded perspective view of the second preferred embodiment of a backlighting folder device according to the present invention; and
Figure 6 is a perspective view of the second preferred embodiment in an assembled state.

Before the present invention is described in greater detail with reference to the accompanying preferred embodiment, it should be noted herein that like elements are denoted by the same reference numerals throughout the disclosure.

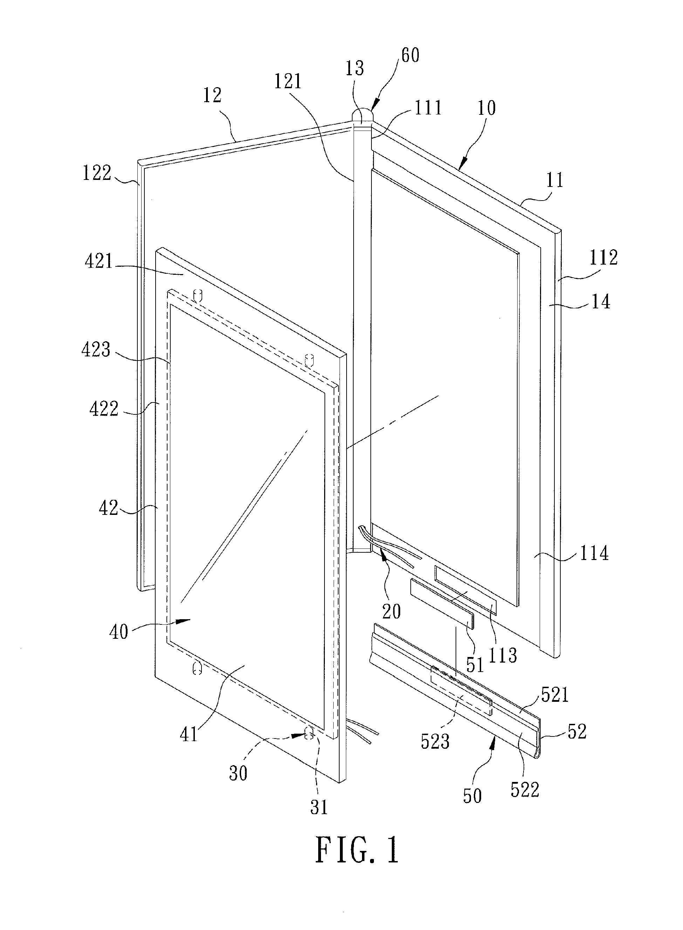

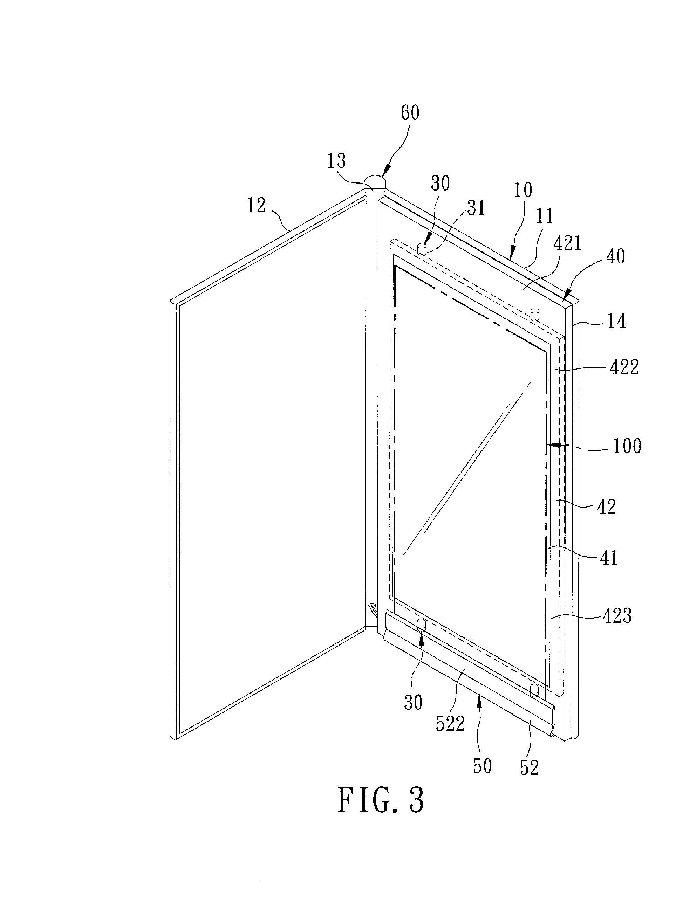

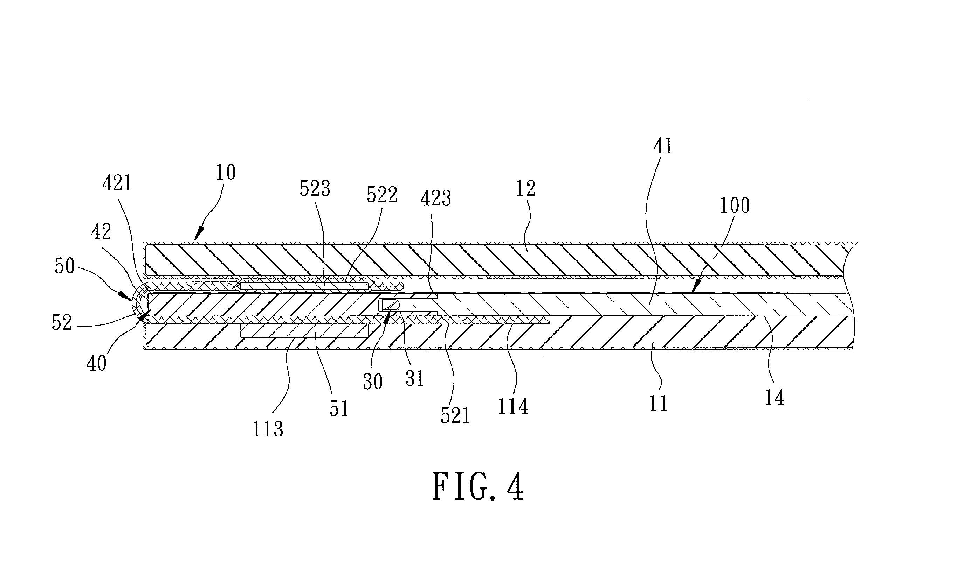

Referring to Figures 1, 2, 3 and 4, the first preferred embodiment of a backlighting folder device of this invention may be used to hold a bill 100 and includes a folder body 10, a power supply, a light-emitting unit 30, a light guide unit 40, a clamp unit 50 and a battery case 60. The power supply includes a conductor unit 20 and a battery unit 70 mounted in the battery case 60.

The folder body 10 has a first cover panel 11, a second cover panel 12 that is foldable or unfoldable relative to the first cover panel 11, a spine 13 interconnecting the first and second cover panels 11, 12 and an inner side 14 defined by the first and second cover panels 11, 12 and the spine 13. The first cover panel 11 has a first inner lateral edge 111 proximate to the spine 13, and a first outer lateral edge 112 distal from the spine 13, and a cavity 113 disposed at the inner side 14 between the first inner and first outer lateral edges 111, 112 . The innerside14 is recessed to form a recessed surface region 114, and the cavity 113 is formed in the recessed surface region 114. The second cover panel 12 has a second inner lateral edge 121 disposed proximate to the spine 13, and a second outer lateral edge 122 distal from the spine 13.

The conductor unit 20 is fixed to the inner side 14 and positioned in the recessed surface region 114.

The light-emitting unit 30 is coupled electrically to the conductor unit 20, and has a plurality of light-emitters 31. In this embodiment, each of the light-emitters 31 is a light-emitting diode.

The light guide unit 40 is mounted fixedly on the inner side 14, and has a light guide plate 41 and a frame 42 surrounding the light guide plate 41. Preferably, the light guide plate 41 is an optical plate made of polymethyl methacrylate (abbreviated as PMMA), and is able to scatter light homogenously within the light guide plate 41. The frame 42 is hollow, and includes a pair of horizontal frame portions 421, a pair of vertical frame portions 422, and a hollow portion 423 defined by the horizontal and vertical frame portions to expose the light guide plate 41. Each of the horizontal frame portions 421 and the vertical frame portions 422 has a U-shaped cross section. The light-emitters 31 are mounted in the horizontal frame portions 421 in proximity to horizontal edges of the light guide plate 41 such that the light from the light-emitters 31 is emitted to the light guide plate 41.

The clamp unit 50 has a magnet 51 embedded in the cavity 113, and a clamp 52 that has a fixed portion 521 fixed to the inner side 14 between the light guide plate 41 and the inner side 14, a clamping portion 522 folded from and extending back over the fixed portion 521, and a magnetically attractive element 523 that is disposed in the clamping portion 522, attracted by the magnet 51, and adhered to the light guide unit 40.

The battery case 60 is fixed to the spine 13, and has a base casing 61, a cover 62, a plurality of screws 63 and a battery chamber 64 confined by the base casing 61 and the cover 62. The base casing 61 has a first portion 611 and a second portion 612. The base casing 61 further has two slide grooves 613 formed respectively in the opposite sides of the base casing 61 and extending from the first portion 611 to the second portion 612. The cover 62 is connected detachably to the base casing 61, and includes a stationary portion 621 covering the first portion 611, and a movable portion 622 covering the second portion 612. The stationary portion 621 has a pair of engaging hooks 623 for engaging the respective slide grooves 613 of the first portion 611. The movable portion 622 has a pair of slide rails 624 to slide along the slide grooves 613 of the second portion 612.

The battery unit 70 includes a plurality of batteries 71 to be mounted in the battery chamber 64 of the battery case 60. The batteries 71 may be removed and replaced from the second portion 612 by detaching the movable portion 622.

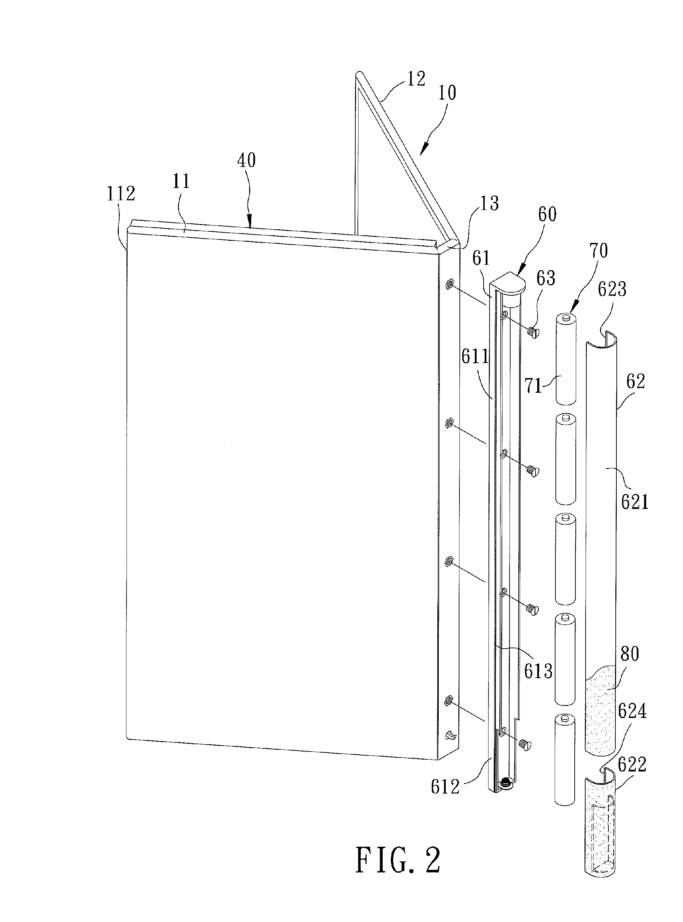

As shown in Figures 2, 3 and 4, when the folder is completely assembled, the light guide plate 41 is mounted fixedly to the inner side 14 and covers the magnet 51 and the conductor unit 20. The clamping portion 522 of the clamp 52 is adhered to the lower one of the horizontal frame portions 432 of the light guide unit 40 through an attraction force applied to the magnetically attractive element 523 by the magnet 51. As such, when the first cover panel 11 is unfolded relative to the second cover panel 12, the bill 100 can be clamped between the clamping portion 522 and the light guide plate 41. By virtue of the power supplied by the battery unit 70, the light-emitting unit 30 mounted on the horizontal frame portions 432 can emit light, which is scattered homogeneously within the light guide plate 41. The light guide plate 41 serves as a backlighting light source to illuminate the bill 100. When it is needed, the slide rails 624 of the movable portion 622 can be operated to slide along the slide groove 613 of the second portion 612 to uncover the second portion 612 for removal or replacement of the batteries 71.

It is worth to mention that the surfaces of the base casing 61 and the cover 62 of the battery case 60 may be provided with a surface layer 80 that has the same material as the folder body 10 so that the battery case 60 can be hidden or decorated.

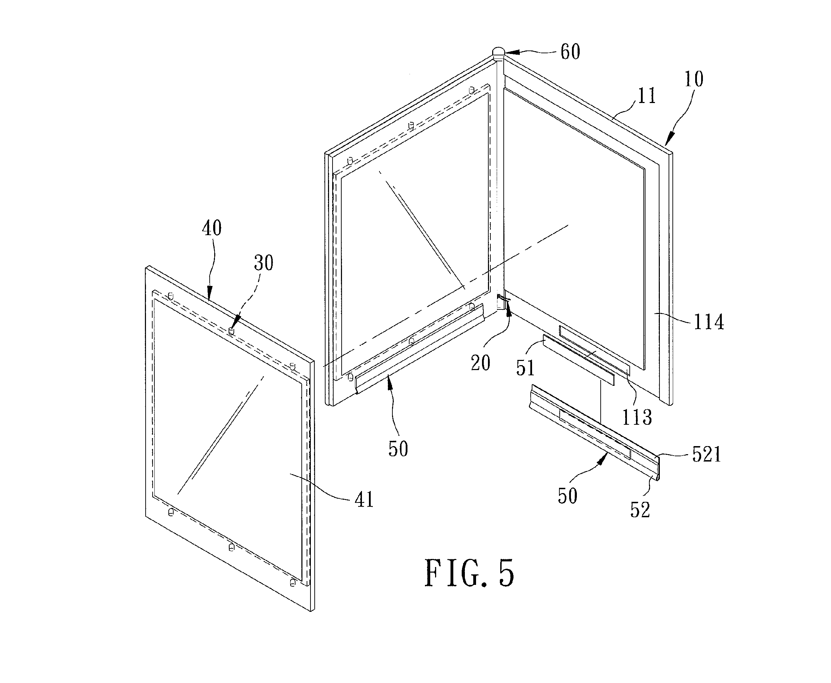

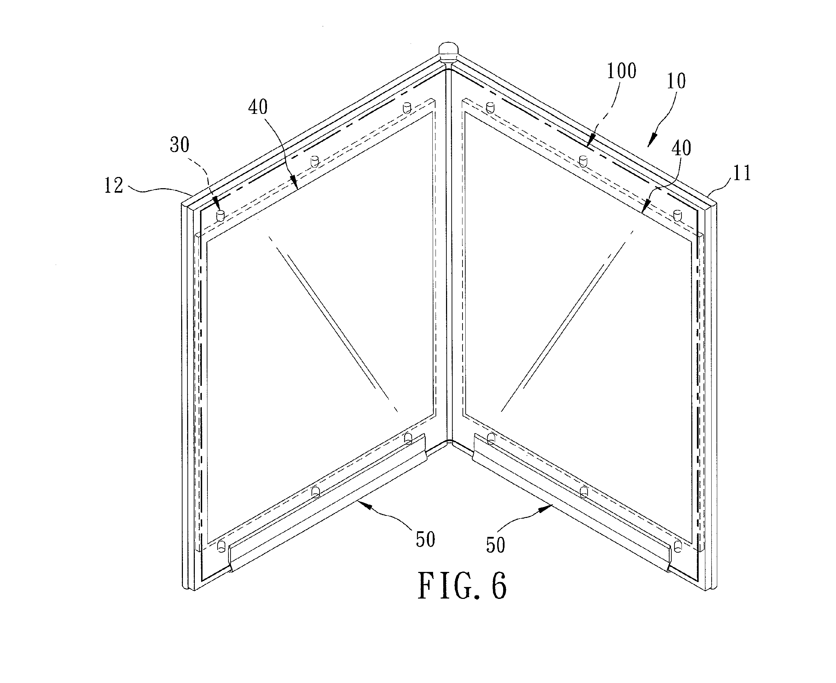

Referring to Figures 5 and 6, the second preferred embodiment of the backlighting folder device according to this invention is substantially similar to the first preferred embodiment. However, the second preferred embodiment includes a pair of light-emitting units 30, a pair of light guide units 40, a pair of clamp units 50, and a pair of conductor units 20 (only one is shown).

The folder body 10 has two cavities 113, each of which is formed in one of the first and second cover panels 11, 12 to receive one of the magnets 51 of the clamp units 50, and two recessed surface regions 114 each formed in one of the first and second cover panels 11, 12 to position one of the conductor units 20 and the fixed portions 521 of one of the clamp units 50.

## Claims

1. A backlighting folder device comprising:
a folder body (10) including two cover panels (11, 12) , a spine (13) interconnecting said cover panels (11, 12) , and an inner side (14) defined by said cover panels (11, 12) and said spine (13);
a power supply (60, 20) mounted on said folder body (10) ;
at least one light-emitting unit (30) connected to said power supply;
at least one light guide unit (40) disposed at said inner side (14) and having a light guide plate (41) to guide light emitted from said light-emitting unit (30); and
at least one clamp unit (50) attached to said folder body (10) at said inner side (14).

2. The backlighting folder device of Claim 1, wherein said light guide unit (40) further has a frame (42) surrounding said light guide plate (41), said light-emitting unit (30) having a plurality of light-emitters (31) mounted in said frame (42) proximate to said light guide plate (41).

3. The backlighting folder device of Claim 2, wherein said inner side (14) of said folder body (10) is recessed to form at least one cavity (113) and at least one recessed surface region (114), said cavity (113) being formed in said recessed surface region (114) , said clamp unit (5) having at least one magnet (51) embedded in said cavity (113) , and at least one clamp that has a fixed portion (521) fixed to said inner side (41)between said light guide unit (40) and said inner side (14), a clamping portion (522) folded from and extending back over said fixed portion (521), and a magnetically attractive element (523) disposed in said clamping portion (522) and attracted by said magnet (51) to position said clamping portion (522) to said fixed portion (521) , said light guide plate (41) being clamped between said fixed and clamping portions (521, 522).

4. The backlighting folder device of Claim 3, wherein said light-emitting unit (30), said light guide unit (40) and said clamping unit (50) are disposed on one of said cover panels (11, 12) at said inner side (14) .

5. The backlighting folder device of Claim 3, wherein a pair of said light-emitting units (30) , a pair of said light guide units (40), and a pair of said clamping units (50) , each of said light-emitting units (30) , each of said light guide units (40), and each of said clamping units (40) being disposed on one of said cover panels (11, 12) at said inner side (14).

6. The backlighting folder device of Claim 1, further comprising a battery case (60) mounted on said spine (13) , said power supply including a battery unit (70) disposed in said battery case, and a conductor unit (20) connected to said battery unit (70).

7. The backlighting folder device of Claim 4, wherein said battery case (60) has a base casing (61) , a cover (62) , and a battery chamber (64) confined by said base casing (61) and said cover (62), said base casing (61) being fixed to said spine (13) , said cover (62) being connected detachably to said base casing (61) .

8. The backlighting folder device of Claim 7, wherein said battery casing (61) has first and second portions (611, 612), said cover (62) having a stationary portion (621) covering and interlocking with said first portion (611), and a movable portion (622) openably covering said second portion (612).
